## Europäisches Patentamt
## European Patent Office
## Office européen des brevets

(19)

(11) Veröffentlichungsnummer: **0 386 443**
**A2**

(12) **EUROPÄISCHE PATENTANMELDUNG**

(21) Anmeldenummer: 90101704.6

(22) Anmeldetag: 29.01.90

(51) Int. Cl.⁵: **B03B 9/06, B07B 1/24**

(30) Priorität: 08.03.89 DE 3907445

(43) Veröffentlichungstag der Anmeldung:
**12.09.90 Patentblatt 90/37**

(84) Benannte Vertragsstaaten:
**AT BE CH DE DK ES FR GB GR IT LI LU NL SE**

(71) Anmelder: **AGR ABFALLSBESEITIGUNGS-GESELLSCHAFT RUHRGEBIET mbH**
**Rüttenscheider Strasse 66**
**D-4300 Essen 1(DE)**

(72) Erfinder: **Reitz, Peter**
**Werner Hell Weg 259**
**D-4630 Bochum(DE)**
Erfinder: **Moeller, Hermann-Josef**
**Friedrichstrasse 10**
**D-4350 Recklingshausen(DE)**

(74) Vertreter: **Vomberg, Friedhelm, Dipl.-Phys.**
**Schulstrasse 8**
**D-5650 Solingen 1(DE)**

(54) **Verfahren und Vorrichtung zur Verwertung von Hausmüll.**

(57) Die Erfindung betrifft ein Verfahren zur Verwertung von Hausmüll, der nach seiner Vorsiebung, Schrottseparation einer gleichzeitigen Sichtung und Trocknung unterzogen wird, bevor das verbleibende Stoffgemenge nachgesiebt, zerfasert und brikettiert wird.

Insbesondere zur Einsparung von Förderwegen und Vorrichtungsteilen sowie zur apparativen Schonung und Reduzierung von Schwermetallen wird vorgeschlagen, nur eine schrottfreie Mittelfraktion von maximal 1000 mm Durchmesser, die von einer Feinfraktion von maximal 100 mm Durchmesser befreit ist, der Brikettierung zuzuführen. Hierzu wird vorzugsweise eine Siebtrommel verwendet, die in der Eingangszone entsprechend kleine Maschenöffnungen und in der Ausgangszone entsprechend größere Maschenöffnungen hat. Die Grobfraktion wird über die offene Stirnseite der Siebtrommel ausgetragen.

EP 0 386 443 A2

Xerox Copy Centre

## Verfahren und Vorrichtung zur Verwertung von Hausmüll

Die Erfindung betrifft ein Verfahren zur Verwertung von Hausmüll, zerkleinertem Sperrmüll und/oder hausmüllähnlichen Abfällen sowie Mischungen hieraus, bei dem der Müll nach seiner Vorsiebung, Schrottseparation einer gleichzeitigen Sichtung und Trocknung unterzogen wird, bevor das verbleibende Stoffgemenge nachgesiebt, zerfasert und brikettiert wird. Die Erfindung betrifft ferner eine Vorrichtung zur Durchführung dieses Verfahrens.

Aufgrund des ständig knapper werdenden Deponieraumes ist es heute nicht mehr möglich, den Hausmüll ohne weitere Behandlung abzukippen. Es hat sich auch gezeigt, daß die Müllvorsortierung durch den Endverbraucher zum einen nur unzureichend durchgeführt wird, zum anderen auch nur solche Produkte ausgesondert werden, die sich wirtschaftlich wieder verwerten bzw. wieder aufbereiten lassen. Insbesondere sind dies Altglas sowie Papier. Dennoch stellt der Müll ein heute noch im wesentlichen völlig inhomogenes Gemisch dar, das vielfach in Verbrennungsanlagen verbrannt wird. Es ist bekannt, daß die dabei entstehende Wärme genutzt werden kann, aber die Kosten nicht deckt. Problematisch sind Müllballaststoffe, wie bis zu 50 % Asche aus keramischem Material und Glas, bis zu 30 % Feuchte, die von Küchenabfällen herrührt, sowie Großstücke, die nicht oder nur unzureichend verbrannt werden.

Es sind daher schon Abfallsortier- und Aufbereitungsverfahren vorgeschlagen worden, bei denen der Hausmüll einer Vorabsiebung unterzogen wird, wobei die feinere Fraktion (mit kleinerem Durchmesser) nach einer Eisenseparation gesichtet, getrocknet, nachgesiebt, zerfasert und brikettiert wird. Die gröbere Fraktion wird ebenfalls (in einer getrennten Magnetabscheidung) von Eisen befreit, zerkleinert und der Vorabsiebung wieder zugeführt. Mit anderen Worten, der Hausmüll wird so lange zerkleinert, bis er eine bestimmte Partikelgröße unterschreitet, bevor er der Sichtung und Trocknung zugeführt wird. Es ist bekannt, daß der Heizwert dieses so aufbereiteten Mülls etwa bei 11 MJ/kg liegt, wobei nicht unerhebliche Energien beim Trocknen aufgewendet werden müssen, um die durchschnittlich 20 % Feuchte zu beseitigen.

Es ist daher Aufgabe der vorliegenden Erfindung, das eingangs genannte Verfahren dahingehend zu verbessern, daß Arbeitsschritte eingespart werden können und der apparative Aufwand minimiert wird. Gleichermaßen soll durch eine geeignete Prozeßführung der Heizwert des Produktes erhöht und der Apparateverschleiß minimiert werden. Es ist ferner Aufgabe der vorliegenden Erfindung, hierzu eine geeignete Vorrichtung anzugeben.

Diese Aufgabe wird verfahrenstechnisch durch die im Anspruch 1 gekennzeichneten Merkmale gelöst. Wesentlicher Grundgedanke des erfindungsgemäßen Verfahrens ist es, das die Feinfraktion mit Partikelgrößen von maximal 100 mm Durchmesser und die Grobfraktion mit Durchmessern oberhalb von 1000 mm aus dem Aufbereitungsprozeß für gepreßten Alternativbrennstoff vorher separiert werden. Dabei wirkt sich insbesondere die Abtrennung der sogenannten Feinfraktion, die im wesentlichen aus nicht brennbarer Asche besteht, apparateschonend und heizwerterhöhend aus, da die betreffenden Partikel üblicherweise einen schmiergelnden Effekt zeigen. Gleichermaßen werden mit der Feinfraktion organische Stoffe, wie z.B. Kartoffelschalen etc., ausgeschleust, so daß die Feuchte des Materials, das weitergeleitet wird, im Durchschnitt erheblich sinkt. Die Feinfraktion eignet sich zur Kompostierung.

Somit gelangt man zu dem Ergebnis, das der Brikettierung nur die relativ heizwertreichen Stoffe (Mittelfraktion) zugeleitet werden.

Nach einer Weiterentwicklung der Erfindung werden die oberen Grenzwerte der Feinfraktion auf 60 bis 40 mm und weiter abgesenkt bzw. bei der Mittelfraktion auf 700 mm, vorzugsweise 500 mm, Durchmesser. Besonders günstig ist es, wenn die Mittelfraktion durch ein Sieb mit einer Maschenweite von $400 \times 1000$ mm$^2$, vorzugsweise $300 \times 700$ mm$^2$, weiterhin vorzugsweise $100 \times 600$ mm$^2$, abgetrennt wird. Hierbei kann nach einer weiteren Ausgestaltung die Absiebung der Mittelfraktion in einer Siebtrommel erfolgen, wobei die längere Seite der im wesentlichen rechteckigen Maschenöffnungen in Drehrichtung liegt.

Apparativ günstig kann das Verfahren durchgeführt werden, wenn die Absiebung der Feinfraktion in einer durchgehenden Siebtrommel mit einer engen Maschenweite in der Eingangszone (Anschlußbereich an die Aufgabestelle des Mülls) und die weitere Maschenweite in der Ausgangszone der Siebtrommel durchgeführt wird. Die Siebtrommel sollte mit einer Geschwindigkeit gedreht werden, die unterhalb der kritischen Drehgeschwindigkeit liegt, bei der der Müll durch die Zentrifugalkräfte mit der Trommel mitläuft. Vorzugsweise wird die Geschwindigkeit zwischen 8 bis 11 Umdrehungen/min nicht überschreiten. Um weitere Handgriffe und Stillstandszeiten der Siebtrommel zur Entfernung von Großteilen, wie Fahrrädern, Kühlschränken etc., die aus mehreren Gründen aus dem Hausmüll zu separieren sind, zu vermeiden, wird vorzugsweise die Großfraktion während des Absiebens der Fein- und Mittelfraktionen durch die gemeinsame Siebtrommel durchgetrieben und am Ende der offenen Siebtrommel ausgetragen. Eine besonders gründliche Abscheidung der Feinfraktion ist dann möglich, wenn die Absiebzeit für die Feinfraktion größer ist als die für die Mittelfraktion. Weiterhin bevorzugt wird das Siebgut während des Siebens kontinuierlich aufgelockert. Durch eine geeignete Trommelneigung zwischen 1 ° und 10 ° wird das Material in Richtung des Siebtrommelaustrages transportiert.

Die Aufgabe wird ferner durch die im Anspruch 9 gekennzeichnete Vorrichtung gelöst. Wesentliches Kernstück hierbei sind die Siebtrommel mit einer Eingangszone zur Absiebung der Feinfraktion und eine Ausgangszone zur Absiebung der Mittelfraktion sowie der offenen Stirnseite. Jeweils unterhalb der Eingangszone und der Ausgangszone sowie der offenen Stirnseite befinden sich jeweilige Abförderer (Stetigförderer), wobei nur die Mittelfraktion den weiteren Vorbereitungsschritten zur Brikettierung weitergeleitet wird. Die Maschenweite der Eingangszone beträgt maximal 100 mm, die der Ausgangszone maximal 1000 mm, vorzugsweise wird der Eingangsbereich auch engere Maschen bis zu 40 mm aufweisen. Die Ausgangszone besitzt nach einer Weiterbildung der Erfindung im wesentlichen rechteckige Maschenöffnungen mit jeweiligen Seitenlängen zwischen 100 mm und 1000 mm, vorzugsweise 300 mm x 700 mm.

Nach einer weiteren Entwicklung der Erfindung ist die längere Seite der rechteckigen Maschenöffnung der Siebtrommel in Drehrichtung angeordnet. Die größere, vorzugsweise doppelt so lange Eingangszone gewährleistet eine nahezu vollständige Entfernung der abrasiv wirkenden Feinfraktion mit einem Abscheidegard größer 90 %. Zur Auflockerung des Mülls dienen radial und parallel zur Siebtrommelachse an der Trommelinnenwand angebrachte Mitnehmer. Hierdurch wird der Wirkungsgrad der Absiebung erhöht. Die an dem feststehenden Trommelgehäuse angebrachten Abstreifer verhindern wirksam das zusetzen der Maschinenöffnungen, insbesondere der Ausgangszone.

Da ohnehin nur die Mittelfraktion weiter aufbereitet wird, soll auch nur das betreffende Abförderband für die Mittelfraktion einen Magnetabscheider aufweisen.

Mit dem vorliegenden Verfahren bzw. der vorliegenden Anlage können fester Brennstoff (Briketts aus der Mittelfraktion) sowie Konfektionierungsmittel für flüssige Stoffe und organisches Material für die Kompostierung geschaffen werden. Das Verfahren bzw. die Vorrichtung können vollautomatisch, d.h. ohne Unterbrechung zur Entnahme von (großen) Störstoffen durchgeführt bzw. betrieben werden.

Ein weiterer wesentlicher Vorteil liegt darin, daß gleichzeitig mit ein und demselben Aggregat (Siebtrommel) Absiebungen in eine Fein- und Mittelfraktion und eine Störstoffseparation durchgeführt werden können.

Ein Ausführungsbeispiel des erfindungsgemäßen Verfahrens sowie der Vorrichtung soll im folgenden anhand der Zeichnungen erläutert werden. Es zeigen:

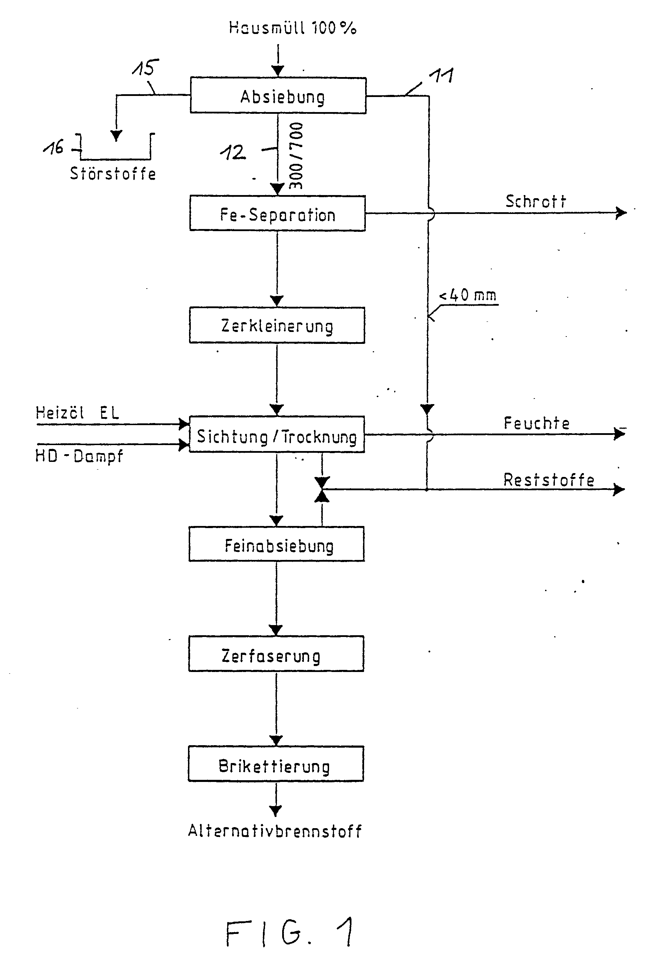

Fig. 1 das Blockschema des Verfahrensprinzips,

Fig. 2 eine schematische Darstellung der erfindungsgemäßen Vorrichtung,

Fig. 3 eine Draufsicht auf die Förderbandanordnung ohne Siebtrommel und ohne Hammermühle,

Fig. 4a eine Seitenansicht der Siebtrommel und

Fig. 4b eine Schnittansicht der Siebtrommel.

Wie bereits oben angesprochen, wird der angelieferte Hausmüll, der ggf. mit zerkleinertem Sperrmüll und/oder hausmüllähnlichen Abfällen gemischt ist, mittels eines Deckenkranes und Polypgreifers auf ein schrägstehendes und stufenlos regelbares und reversierbares Plattenband aufgegeben. Durch die stufenlose Regelung der Vorschubes kann der Input bzw. der Durchsatz der Anlage bestimmt werden. Von diesem Plattenband wird das aufgegebene Material mittels einer Rutsche zur Absiebung in ein Trommelsieb gegeben. Die Laufrichtungen des Bandes wird reversiert, wenn das heterogene Aufgabematerial zu Störungen im Siebtrommeleinlauf führt.

Normalerweise wird im Trommelsieb der durch Lagerung und Polypgreifer vorkomprimierte Müll durch spezielle Einbauten, wie Mitnehmer aufgelockert und spröde Bestandteile, wie z.B. Glas, werden zerkleinert. Die Sieböffnungen betragen 10 bis 100 mm im Durchmesser in der Eingangszone, wodurch eine Feinfraktion 11 abgetrennt wird. Diese Feinfraktion 11 besteht im wesentlichen aus Aschen, z.B. zerkleinerten spröden Materialien, Garten-, Obst- und Gemüseabfällen und kleinen Papier- bzw. Pappestückchen. Diese Fraktion eignet sich für die Kompostierung, der sie nach Zwischenlagerung in einem separaten Bunker - zusammen mit noch anderen zu behandelnden Reststoffen -zugeführt wird. Ferner werden aus dem Hausmüll sperrige, nicht verwertbare Störstoffe 15 mit größerem Durchmesser, wie z.B. Fahrräder oder ähnliches, entfernt. Diese Störstoffe werden vorzugsweise in einen Preßcontainer 16 gegeben. Zur Aufbereitung von festem Brennstoff wird lediglich eine sogenannte Mittelfraktion 12 verwertet, das sind solche Teile, die nach der Feinfraktionabsiebung durch eine Maschenweite von 300 mm x 700 mm, fallen. Die Mittelfraktion wird mittels eines geeigneten Förderers an einem Magneten vorbeigeführt und entschrottet. Der in der Fe-Separation anfallende Schrott ist ggf. ebenfalls wieder verwertbar. Die entschrottete Mittelfraktion wird dann einer Zerkleinerung zugeführt, bevor sie in einem Sichter/Trockner gesichtet und getrocknet wird. Die bei diesem Prozeß nach Absonderung der Feuchte und der ebenfalls unbrauchbaren Reststoffe verbleibenden Materialien werden nach einer erneuten Feinabsiebung einer Zerfaserung zugeführt, bevor sie zu einem Alternativbrennstoff brikettiert werden.

Dadurch, daß die Feinfraktion vor der Zerkleinerung abgesiebt wird, kann sie nicht bei der Zerkleinerung in die Mittelfraktion eingerieben werden. Der Aschegehalt und der Verschleiß werden reduziert, da die Feinfraktion einen schmiergelnden Effekt hat. Dadurch, daß von vornherein nur eine mittlere Fraktion weitertransportiert wird, kann auch der Vorgang der Fe-Separation erheblich reduziert werden. Der Zerkleinerung ist eine Entschrottung vorgeschaltet, damit Fe- und Fe-Legierungen bzw. Beschichtungen mit Eisen nicht in die entschrottete Mittelfraktion bei der Zerkleinerung eingerieben werden. Dies erspart gegenüber dem Stand der Technik auch ein mehrfaches Durchlaufen eines Kreislaufes, wie es bisher üblich war. Somit kann insgesamt die im Prozeß mitzuführende Asche und der Schwermetallgehalt jeweils minimiert werden und der Keizwert optimiert werden. Insbesondere ist der Verschleiß der Anlagenaggregate erheblich reduziert.

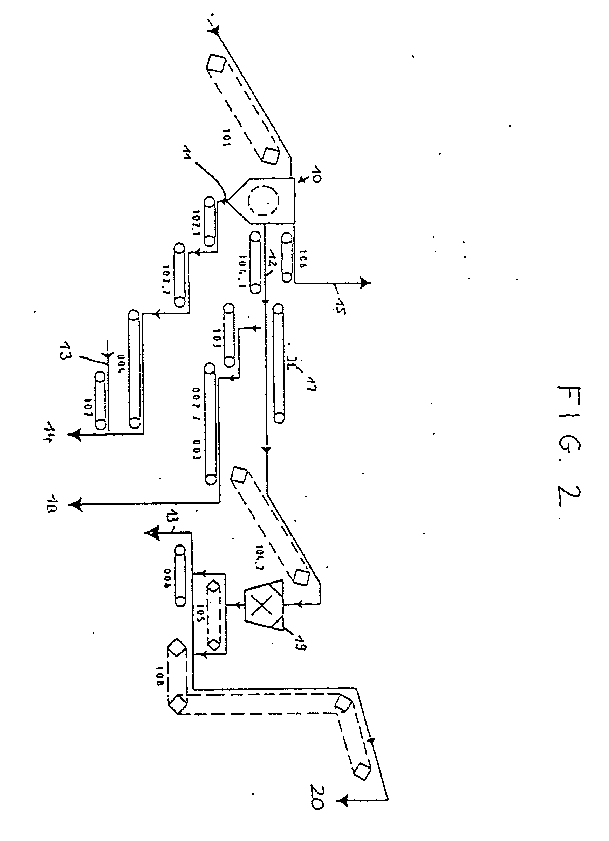

Der mittels eines nicht dargestellten Greifers auf ein Plattenband 101 aufgegebene Müll wird mittels Rutsche in die Siebtrommel 10 transportiert (s. Fig. 2). Dort wird zunächst die Feinfraktion 11 ausgetragen und über Förderbänder 102.1., 102.2, 004 in einen Reststoffbunker 14 gegeben. Erfahrungsgemäß eignet sich die Feinfraktion zur Kompostierung, da sie zum großen Teil aus organischen Stoffen besteht. Gegebenenfalls kann der ballistische Austrag 13 aus der Hammermühle, der von dort über das Förderband 107 abtransportiert wird, in den Reststoffbunker gegeben werden.

Durch die weiter unten beschriebene Siebtrommel mit am Austragsende offener Stirnseite werden fernerhin großvolumige Störstoffe als Sieböberlauf von dem Förderband 106 in einen Fallschacht abtransportiert.

Als späterer fester Brennstoff wird lediglich die Mittelfraktion 12 weiterverarbeitet. Diese wird von einem Förderer 104.1 aufgefangen und an einem Überbandmagnet 17 vorbeigeführt. Die dort separierten magnetischen Stoffe (im wesentlichen Eisen bzw. Stahlstücke) werden über Förderbänder 103 sowie 002/003 in einen Schrottbunker 18 abgeführt. Die entschrottete Mittelfraktion 12 gelangt dann über einen weiteren schräggestellten Förderer 104.2 in eine Hammermühle 19. Von dort aus gelangt das zerkleinerte Gut über weitere Förderer 105 und 108 in eine Zellradschleuse 20. Die übrigen Aggregate zur Zerfaserung sowie Brikettierung entsprechen den nach dem Stand der Technik bekannten. Der gegebenenfalls anfallende Hammermühlenaustrag 13 wird über Förderband 107 dem Bunker 14 zugeführt.

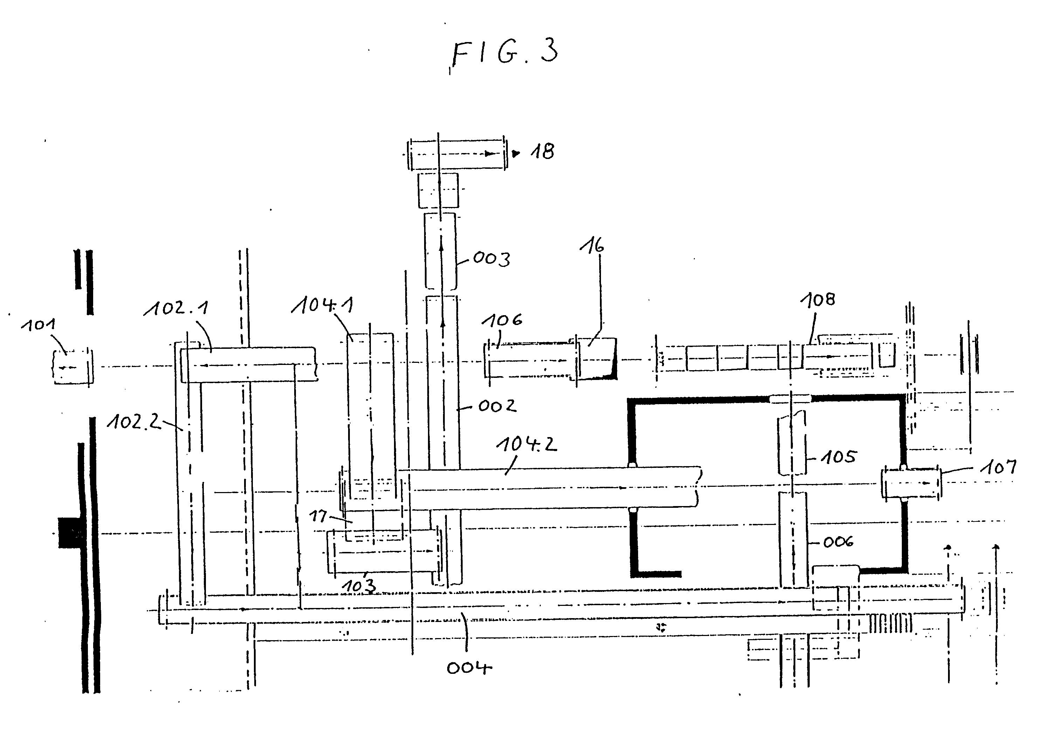

Die Förderbandführung in einer Draufsicht ist Fig. 3 näher zu entnehmen. Aus dieser Darstellung wird insbesondere deutlich, daß gegenüber nach dem Stand der Technik bisher bekannten Anordnungen in erheblichem Maße Förderwege bzw. Fördermittel (Förderbänder) eingespart werden konnten.

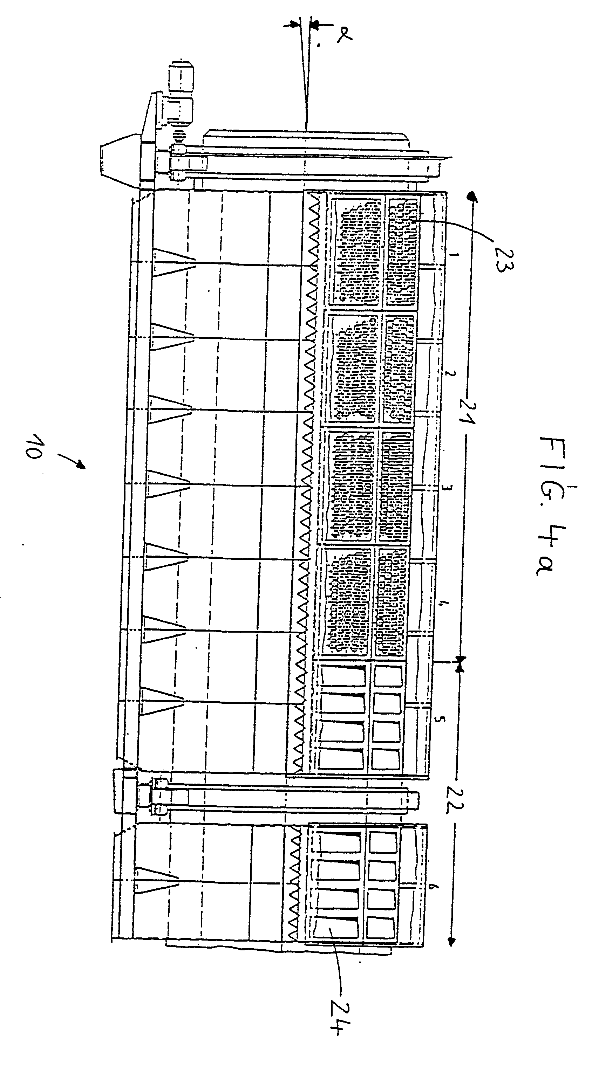

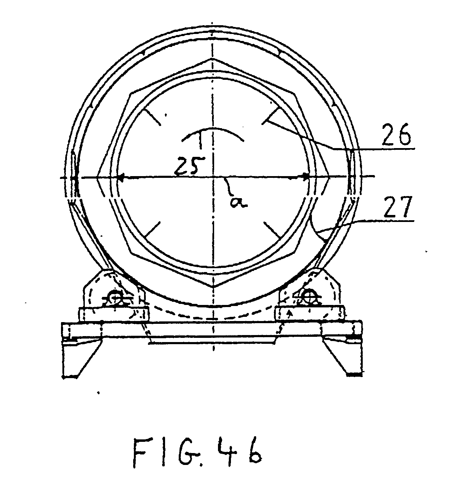

Eine Siebtrommel 10 ist Fig. 4a und 4b zu entnehmen. Die hinsichtlich ihres Aufbaus, Antriebs, Lagerung etc. im Prinzip bekannte Siebtrommel weist als Besonderheit zwei unterschiedliche Zonen 21 und 22 auf. Während in der Eingangszone 21 die Siebtrommel Maschen 23 mit einer Maschenweite 40 mm aufweist, sind in der Ausgangszone 22 rechteckige Austrittsöffnungen 24 einer Seitenlänge von 300 bzw. 700 mm vorgesehen. Beim Betrieb der Siebtrommel in Drehrichtung 25 wird das über eine Rutsche in den vorderen Teil des Bereiches 23 (Fig. 4a, ganz links) aufgegebene Gut von der Feinfraktion getrennt, die durch die Maschen 23 abfällt. Während des Absiebens wird der Müll durch Mitnehmer aufgelockert. Der in Richtung der Ausgangszone 22 rutschende Müll "durchläuft" vier Sektionen a 1,5 m, bevor er die größeren Öffnungen 24 in den letzten beiden Sektionen erreicht. Beim Absieben der Mittelfraktion durch Öffnungen 24, die im wesentlichen rechtekig sind und bei denen die Längsrechteckseite in Drehrichtung 25 angeordnet ist, ist diese Mittelfraktion bereits von der Feinfraktion getrennt. Nur diese Mittelfraktion wird zur Aufbereitung zu gepreßtem Brennstoff verwertet. Die Grobfraktion mit solchen Teilen, die nicht durch die relativ großen Öffnungen 24 fallen, wird an einem Überlauf an der ganz oder teilweise offenen Stirnseite der Ausgangszone der Siebtrommel 10 ausgeschieden. Unterhalb der Eingangszone 21, der Ausgangszone 22 sowie dem Überlauf befinden sich, wie in Fig. 2 und 3 dargestellt, jeweilige Förderbänder 102.1, 104.1 und 106.

## Ansprüche

1. Verfahren zur Verwertung von Hausmüll, zerkleinertem Sperrmüll und/oder hausmüllähnlichen Abfällen sowie Mischungen hieraus, bei dem der Müll nach einer Vorsiebung, Schrottseparation einer gleichzeitigen Sichtung und Trocknung unterzogen wird, bevor das verbleibende Stoffgemenge nachgesiebt, zerfasert und brikettiert wird, **dadurch gekennzeichnet**, daß nach Absiebung einer Feinfraktion von maximal 100 mm Durchmesser nur eine schrottfreie Mittelfraktion von maximal 1000 mm Durchmesser der Brikettierung zugeführt wird.

2. Verfahren nach Anspruch 1, gekennzeichnet durch eine Feinfraktion ≤ 60 mm Durchmesser, vorzugsweise ≤ 40 mm, und/oder eine Mittelfraktion von ≤ 700 mm, vorzugsweise ≤ 500 mm, Durchmesser.

3. Verfahren nach Anspruch 1 oder 2, dadurch gekennzeichnet, daß die Mittelfraktion durch ein Sieb mit einer Maschenweite von 400 mm x 700 mm, vorzugsweise 300 x 700 mm², weiterhin vorzugsweise 100 x 600 mm², abgetrennt wird.

4. Verfahren nach einem der Ansprüche 2 oder 3, dadurch gekennzeichnet, daß die Absiebung der Mittelfraktion in einer Siebtrommel erfolgt, wobei die längere Seite der im wesentlichen rechteckigen Maschenöffnung in Drehrichtung liegt.

5. Verfahren nach einem der Ansprüche 1 bis 4, dadurch gekennzeichnet, daß die Absiebung der Feinfraktion und/oder der Mittelfraktion in Siebtrommeln, vorzugsweise in einer durchgehenden Siebtrommel mit einer engen Maschenweite in der Eingangszone und einer weiteren Maschenweite in der Ausgangszone, durchgeführt wird, wobei die Siebtrommel mit einer Geschwindigkeit unterhalb der kritischen Geschwindigkeit, gedreht wird.

6. Verfahren nach Anspruch 5, dadurch gekennzeichnet, daß die Grobfraktion während des Absiebens der Fein- und Mittelfraktion durch die Siebtrommel bzw. Siebtrommeln mit dem Siebgut durchgetrieben und am Ende der offenen Siebtrommel ausgetragen wird.

7. Verfahren nach einem der Ansprüche 1 bis 6, dadurch gekennzeichnet, daß die Absiebzeit für die Feinfraktion größer ist als die für die Mittelfraktion.

8. Verfahren nach einem der Ansprüche 1 bis 7, dadurch gekennzeichnet, daß das Siebgut während des Siebens der Fein- und/oder der Mittelfraktion kontinuierlich aufgelockert und durch die Neigung der Siebtrommel mit einer Neigung gegenüber der Horizontalen zwischen 1 bis 10 °, vorzugsweise zwischen 4 und 6 ° in Richtung des Ausgangs der Siebtrommel transportiert wird.

9. Vorrichtung zur Durchführung des Verfahrens nach den Ansprüchen 1 bis 8, mit einer Siebtrommel (10), Zu- und Abförderern, Magnetabscheidern (17), Mahl- und Nachsiebungsvorrichtungen sowie Einrichtungen zum Zerfasern und Brikettieren, gekennzeichnet durch eine Siebtrommel (10), die im Anschlußbereich der Aufgabestelle des Mülls (Eingangszone (21)) eine Maschenweite (23) von maximal 100 mm und in der Ausgangszone (22) eine Maschenweite (24) von maximal 1000 mm und entsprechend angeordnete Abförderer (102.1, 102.2, 004; 104.1, 1042) aufweist) wobei unterhalb der Ausgangszone (22) ein Abförderer (104.1.) zum Weitertransport in die Mahlvorrichtung (19) und unterhalb der Eingangszone (21) ein Abförderer (102.1) zum Abtransport in einen Bunker (14) bzw. zur Kompostierung vorgesehen sind.

10. Vorrichtung nach Anspruch 9, dadurch gekennzeichnet, daß die Siebtrommel (10) im Eingangsbereich (21) eine Maschenweite von maximal 60 mm, vorzugsweise maximal 40 mm, und/oder die Ausgangszone (22) im wesentlichen rechteckige Maschenöffnungen (24) mit einer Seitenlänge jeweils zwischen 100 mm und 1000 mm, vorzugsweise 300 x 700 mm², aufweisen.

11. Vorrichtung nach Anspruch 9 oder 10, dadurch gekennzeichnet, daß die längere Seite der rechteckigen Maschenöffnung (24) der Siebtrommel (10) in Drehrichtung (25) liegt.

12. Vorrichtung nach einem der Ansprüche 9 bis 11, dadurch gekennzeichnet, daß die Siebtrommel (10) an der Stirnseite der Ausgangszone (22) offen ist.

13. Vorrichtung nach einem der Ansprüche 9 bis 12, dadurch gekennzeichnet, daß die Eingangszone (21) größer ist als die Ausgangszone (22) der Siebtrommel (10), vorzugsweise doppelt so groß.

14. Vorrichtung nach einem der Ansprüche 9 bis 13, dadurch gekennzeichnet, daß die Siebtrommel (10) radial und parallel zur Siebtrommelachse Mitnehmer (26) an dem Trommelinnenseitenmantel aufweist.

15. Vorrichtung nach einen der Ansprüche 9 - 14, dadurch gekennzeichnet, daß die Siebtrommel (10) an dem feststehenden Trommelgehäuse Abstreifer (27) aufweist, die ein Zusetzen der Maschenöffnungen wirksam verhindern.

16. Vorrichtung nach einem der Ansprüche 9 bis 15, dadurch gekennzeichnet, daß die Siebtrommel (10) eine Länge von 6 bis 18 m aufweist, die vorzugsweise in einzelne Sektionen (1 bis 6) von 1 bis 3 m Länge aufgeteilt ist.

17. Vorrichtung nach einem der Ansprüche 9 bis 16, dadurch gekennzeichnet, daß die Siebtrommel (10) einen Durchmesser (d) von 2 bis 4 m aufweist.

18. Vorrichtung nach einem der Ansprüche 9 bis 17, dadurch gekennzeichnet, daß nur der Abförderer (104.1) für die Mittelfraktion (12) einen Magnetabscheider (17), vorzugsweise einen Überbandmagneten, aufweist.

Hausmüll 100 %

15

16 — Störstoffe

Absiebung

12

300/700

11

Fe-Separation

Schrott

Zerkleinerung

<40 mm

Heizöl EL

HD-Dampf

Sichtung/Trocknung

Feuchte

Reststoffe

Feinabsiebung

Zerfaserung

Brikettierung

Alternativbrennstoff

FIG. 1

FIG. 2

EP 0 386 443 A2

FIG. 3

FIG. 4a

EP 0 386 443 A2

FIG. 46